# EUROPEAN PATENT APPLICATION

(11) **EP 2 469 732 A1**
(43) Date of publication of application: **27.06.2012**
(21) Application number: 10809448.3
(22) Date of filing: 10.02.2010
(51) Int. Cl.: H04B 7/14

(54) **RELAYING NODE, TIME DIVISION DUPLEX COMMUNICATION SYSTEM AND COMMUNICATION METHOD**

(30) Priority: 21.08.2009 CN 200910171306
(71) Applicant: Fujitsu Limited, Kawasaki-shi, Kanagawa 211-8588 (JP)
(72) Inventor: ZHANG, Yuantao, Beijing 100025 (CN); WANG, Jian, Beijing 100025 (CN); TIAN, Jun, Beijing 100025 (CN); WU, Jianming, Beijing 100025 (CN)
(74) Representative: Holz, Ulrike
(86) International application number: PCT/CN2010/070610
(87) International publication number: WO 2011/020314

(57) **Abstract**

A relay node, time division duplex communication system and communication method are disclosed. The communication system comprises a base station, mobile stations and the relay node. The relay node will not be in receiving and transmitting state synchronously. The communication method comprises that the relay node receives a first signal from the base station in a predetermined downlink subframe of a frame and transmits a second signal to the base station in a predetermined uplink subframe of the frame, wherein the first signal is a response signal for the second signal or the second signal is a response signal for the first signal.

## Description

### FIELD OF THE INVENTION

The present invention generally relates to the field of wireless communication, and in particular to a time division duplex communication system, a communication method therein and a relay node.

### BACKGROUND OF THE INVENTION

With the fast development of wireless multimedia services, users have increasing demands for data communication capability and transmission quality. However, since there are many dead spaces formed due to influence of factors such as barriers and shadows in the complex wireless environment, it is difficult for a user to obtain continuous communication service with high speed and high quality. In order to solve this problem, a relay node is used in a wireless system to relay wireless communication signals between a base station and a mobile station, so as to improve system throughput and user data rate.

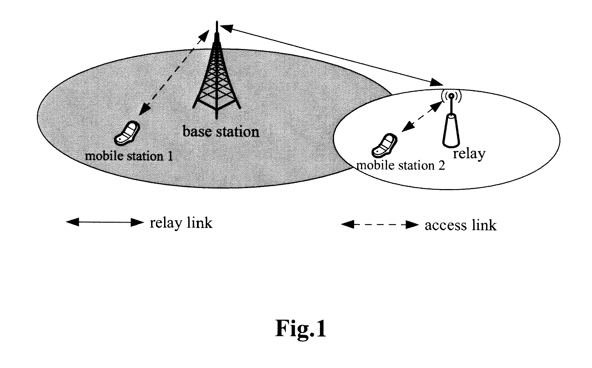

Figure 1 illustrates a schematic view of a wireless communication system. As shown in Figure 1, the wireless communication system includes a base station, a relay node and a mobile station. The mobile stations are divided into those served by a relay node, namely the mobile station 2, and those served by a base station, namely the mobile station 1.The link between a base station and a relay node is referred to as a relay link, as indicated by the solid arrows in Figure 1. The link between a relay node and a mobile station or between a base station and a mobile station is referred to as an access link, as indicated by the dotted arrows in Figure 1. A base station sends data to a relay node via a relay link at a certain point of time, and at a certain point of time that follows, the relay node sends the data to a mobile station via an access link.

Hereinafter, a frame structure employed in the wireless communication is described by taking a LTE (Long Term Evolution) TDD (Time Division Duplexing) wireless communication system as an example. Each frame in the frame structure of the LTE TDD wireless communication system is of the length of 10ms and includes 10 sub-frames of 1ms length each. Depending on the different ratios of uplink sub-frames to downlink sub-frames in a frame, there are totally 7 sub-frame configurations defined in the LTE TDD wireless communication system, as shown in the following table1.

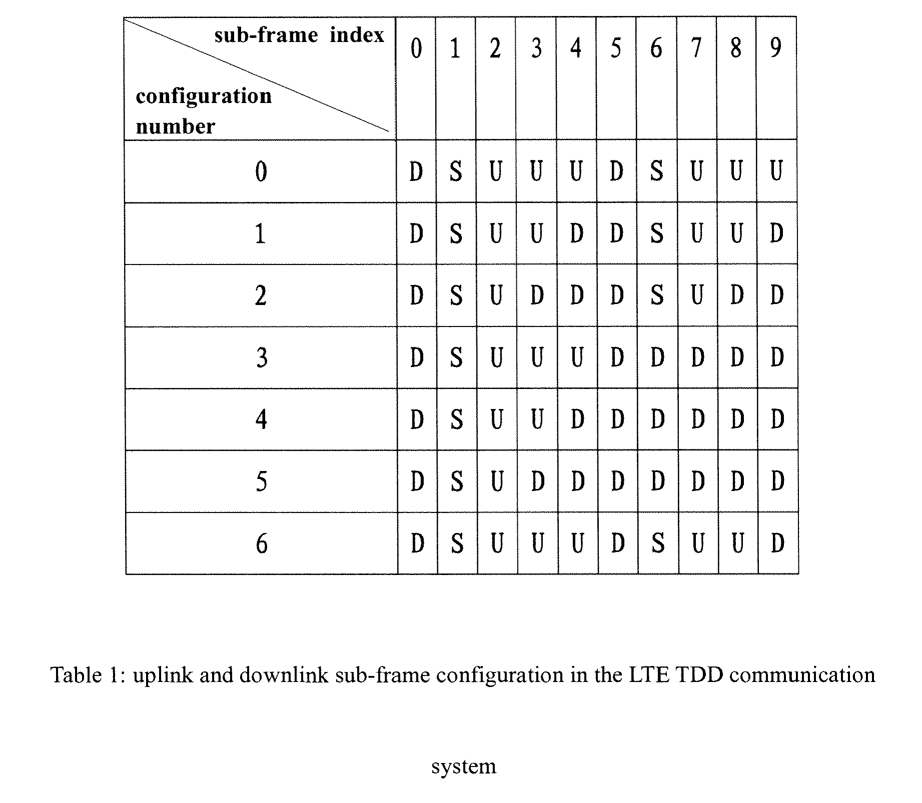

In the table 1, U represents an uplink sub-frame, D represents a downlink sub-frame, and S represents a special sub-frame. In an S sub-frame, the first few OFDM (Orthogonal Frequency Division Multiplexing) symbols are used for the downlink data sending while the subsequent few OFDM symbols are used for the uplink and downlink switching and the uplink access signal sending. In order to facilitate the expression, the special sub-frame and the downlink sub-frame are collectively referred to as downlink sub-frame. The uplink sub-frame U is used for signal transmission from the mobile station to the relay node or from the mobile station to the base station, or for signal transmission from the relay node to the base station. The downlink sub-frame D and the special sub-frame S are used for signal transmission from the base station to the mobile station or from the relay node to the mobile station, or for signal transmission from the base station to the relay node.

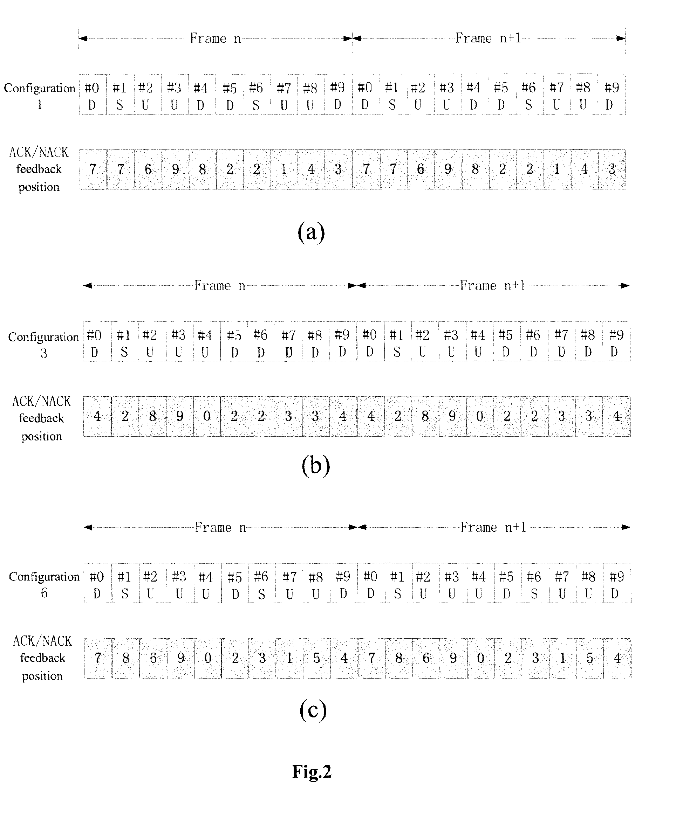

After receiving data sent by the base station or the relay node, the mobile station is required to send a decoding response signal ACK/NACK to the base station or the relay node, where ACK represents a correct decoding signal and NACK represents a mistaken decoding signal. It is stipulated in the existing LTE TDD standard that the time interval between data receiving by a device and ACK/NACK feedback by the device should be greater than or equal to 3ms, namely as long as three sub-frames, and ACK/NACK feedback locations are fixedly set for 7 sub-frame configurations, as shown in Figure 2 (a), Figure 2 (b) and Figure 2 (c), which respectively show schematic views of sub-frame configurations 1, 3 and 6 in an LTE TDD wireless communication system. As shown in Figure 2 (a), according to the sub-frame configuration 1, for example, the mobile station is required to feed back ACK/NACK in the seventh sub-frame after receiving data in the 0th sub-frame and/or the first sub-frame, and for example the base station is required to feed back ACK/NACK in the sixth sub-frame after receiving data in the second sub-frame.

In the case where the relay node is taken into account, the feedback scheme shown in Figure 2 may have problems, since some of the uplink sub-frames must be set to be uplink relay link sub-frame in which a relay node sends a signal to a base station, and some of the downlink sub-frames must be set to be downlink relay link sub-frame in which a relay node sends a signal to a mobile station.

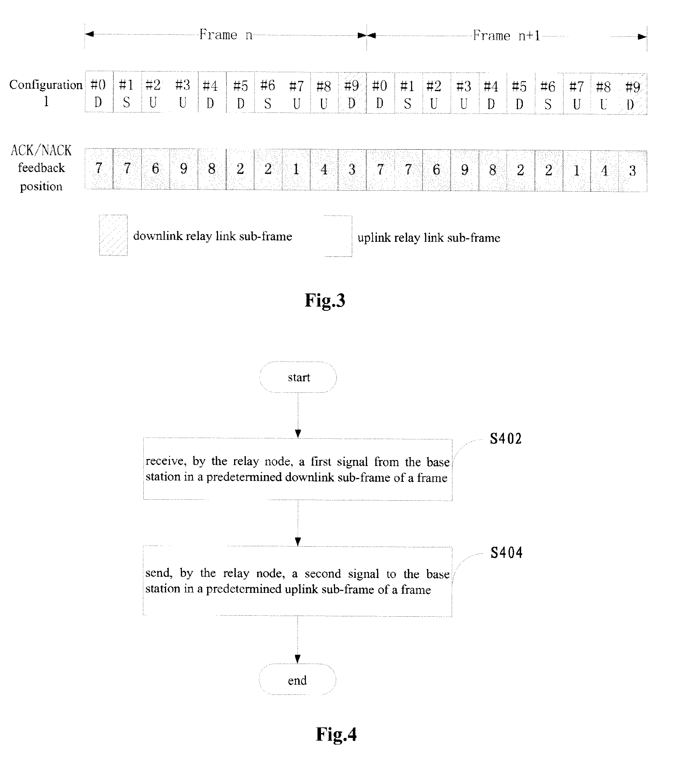

ACK/NACK, which the mobile station generates after receiving data, should be sent in the corresponding fixed uplink sub-frames. If those uplink sub-frames are used as the uplink relay link sub-frame, the relay node may be unable to receive ACK/NACK from the mobile station since the relay node is in a sending state in the uplink relay link, i.e. there is collision between ACK/NACK and data. Figure 3 is taken as an example to illustrate how this collision occurs. In Figure 3, the sub-frame #2 is set to be an uplink relay link sub-frame, and the sub-frame #9 is set to be a downlink relay link sub-frame. The data signals sent by the relay node in the fifth sub-frame and the sixth sub-frame correspond to ACK/NACK fed back by the mobile station to the relay node in the second sub-frame. However, the relay node may be unable to receive ACK/NACK fed back by the mobile station served by the relay node, since at this point of time the sub-frame #2 is already used as an uplink relay link sub-frame, i.e. the relay node is in a sending state. That is, the collision between ACK/NACK and data sending occurs.

### SUMMARY OF THE INVENTION

It is necessary to provide a scheme which is able to avoid the above mentioned collision between ACK/NACK and data.

The present invention provides a communication method in a time division duplex communication system. The communication system includes a base station, a mobile station and a relay node, the relay node being not in a receiving state and a sending state concurrently. The communication method includes: receiving, by the relay node, a first signal from the base station in a predetermined downlink sub-frame of a frame; and sending, by the relay node, a second signal to the base station in a predetermined uplink sub-frame of a frame; wherein the first signal is a response signal to the second signal or the second signal is a response signal to the first signal.

According to one aspect of the present invention, there is provided a relay node used for a time division duplex communication system, the communication system including a base station, a mobile station and a relay node. The relay node includes a transceiver which is not in a receiving state and a sending state concurrently and the transceiver is configured to: receive a first signal from the base station in a predetermined downlink sub-frame of a frame; and send a second signal to the base station in a predetermined uplink sub-frame of a frame; wherein the first signal is a response signal to the second signal or the second signal is a response signal to the first signal.

According to another aspect of the present invention, there is provided a time division duplex communication system including a base station, a mobile station, and the above mentioned relay node.

### BRIEF DESCRIPTION OF THE DRAWINGS

The present invention may be better understood by referring to the detailed description in conjunction with the accompanying drawings hereinafter. The accompanying drawings together with the following detailed description are included in the present description and form a part of the description, so as to be used for further illustrating the preferable embodiments of the present invention and explaining the principle and advantages of the present invention, wherein

Figure 1 shows a schematic view of a wireless communication system;

Figure 2 (a), Figure 2 (b) and Figure 2 (c) respectively show schematic views of sub-frame configurations 1, 3 and 6 as well as ACK/NACK feedback schemes in an LTE TDD wireless communication system;

Figure 3 shows a schematic view of collision between ACK/NACK and data in the prior art;

Figure 4 shows a flow chart of a communication method in a time division duplex communication system according to one embodiment of the present invention;

Figure 5 shows a schematic view of a first ACK/NACK feedback scheme of the sub-frame configuration 1;

Figure 6 shows a schematic view of a second ACK/NACK feedback scheme of the sub-frame configuration 1;

Figure 7 shows a schematic view of a third ACK/NACK feedback scheme of the sub-frame configuration 1;

Figure 8 shows a schematic view of a fourth ACK/NACK feedback scheme of the sub-frame configuration 1;

Figure 9 shows a schematic view of a first ACK/NACK feedback scheme of a sub-frame configuration 3;

Figure 10 shows a schematic view of a second ACK/NACK feedback scheme of the sub-frame configuration 3;

Figure 11 shows a schematic view of ACK/NACK feedback scheme of a sub-frame configuration 6;

Figure 12 shows a structural view of a relay node according to an embodiment of the present invention; and

Figure 13 shows a structural view of a time division duplex communication system according to an embodiment of the present invention.

### DETAILED DESCRIPTION OF THE INVENTION

Hereinafter, embodiments of the present invention will be described by referring to the accompanying drawings. It should be noted that representations and descriptions of the components and processes which are unrelated to the present invention and already know by the skilled in the art are omitted in the accompanying drawings and this description for the purpose of conciseness.

In an LTE TDD wireless communication system, a relay node may not in a receiving state and a sending state concurrently. Therefore, in a downlink relay link, the relay node is in a receiving state, and thus may not send any signal to a mobile station served by this relay node; and in an uplink relay link, the relay node is in a sending state, and thus may not receive any signal which is sent by the mobile station to this relay node. Therefore, in order to utilize the relay node more effectively, generally one or more sub-frames of one 10ms frame are configured to be relay link sub-frames used for communication in a relay link, and the other sub-frames are configured to be access link sub-frames used for communication in an access link.

In order to avoid the occurrence of the collision problem mentioned above, in the embodiments of the present invention there is provided a scheme to pair the uplink relay link sub-frame with the downlink relay link sub-frame.

Figure 4 shows a flow chart of a communication method in a time division duplex communication system according to one embodiment of the present invention.

In the step S402, the relay node receives a first signal from the base station in a predetermined downlink sub-frame of a frame.

In the step S404, the relay node sends a second signal to the base station in a predetermined uplink sub-frame of a frame. Herein, the first signal is a response signal to the second signal or the second signal is a response signal to the first signal.

It should be noted that the predetermined downlink sub-frame in which the relay node receives the first signal and the predetermined uplink sub-frame in which the relay node sends the second signal may be not in the same frame.

It can be seen that, in the steps S402 and S404, the predetermined downlink sub-frame is a sub-frame predetermined to be used as the downlink relay link and the predetermined uplink sub-frame is a sub-frame predetermined to be used as the uplink relay link. The above mentioned response signal may be an ACK/NACK feedback signal for a data signal. That is to say, the first signal may be a data signal and the second signal may be a decoding response signal for the first signal, namely the ACK/NACK feedback signal; or the second signal may be a data signal and the first signal may be the ACK/NACK feedback signal for the second signal.

In the above mentioned method, by pairing a downlink relay link sub-frame with a uplink relay link sub-frame, these two sub-frames are respectively used for transmission of a data signal and a response signal to the data signal between the relay node and the base station. That is to say, if the relay node receives a data signal from the base station in a downlink relay sub-frame, the relay node sends to the base station a response signal to the data signal in a paired uplink sub-frame; and if the relay node sends a data signal to the base station in an uplink sub-frame, the relay node receives from the base station a response signal to the data signal in a paired downlink relay sub-frame. The sub-frames rather than the relay link sub-frames are access link sub-frame. Since the downlink relay link sub-frame and the uplink relay link sub-frame are already paired, the mobile station is not able to perform, in the uplink relay link sub-frame, feedback for a data signal sent by the relay node to the mobile station in the downlink access link sub-frame. Thus the collision is avoided. There may be one pair or a plurality of pairs of the above mentioned paired downlink relay link sub-frame and uplink relay link sub-frame.

Hereinafter, the ACK/NACK feedback schemes may be described in detail by taking an LTE TDD wireless communication system as an example.

In an LTE TDD wireless communication system, in a 10ms frame, a broadcast signaling, an addressing signaling and a synchronization signaling are transmitted fixedly in the 0th sub-frame, the first sub-frame, the fifth sub-frame and the sixth sub-frame, i.e. the mobile station receives system information from the base station or the relay node in these four sub-frames. Therefore, the 0th sub-frame, the first sub-frame, the fifth sub-frame and the sixth sub-frame may only be used as downlink access link sub-frames other than relay link sub-frames. As described above, since the 0th sub-frame, the first sub-frame, the fifth sub-frame and the sixth sub-frame cannot be used as downlink relay link sub-frames, the 0th sub-frame, the first sub-frame, the fifth sub-frame, the sixth sub-frame and other downlink access link sub-frames can only be used by the base station and the relay node to send respectively a signal to the mobile stations they respectively serve for.

Moreover, it is stipulated in the existing LTE TDD standard that the time interval between data receiving by a device and ACK/NACK feedback by the device should be greater than or equal to 3ms, namely as long as three sub-frames.

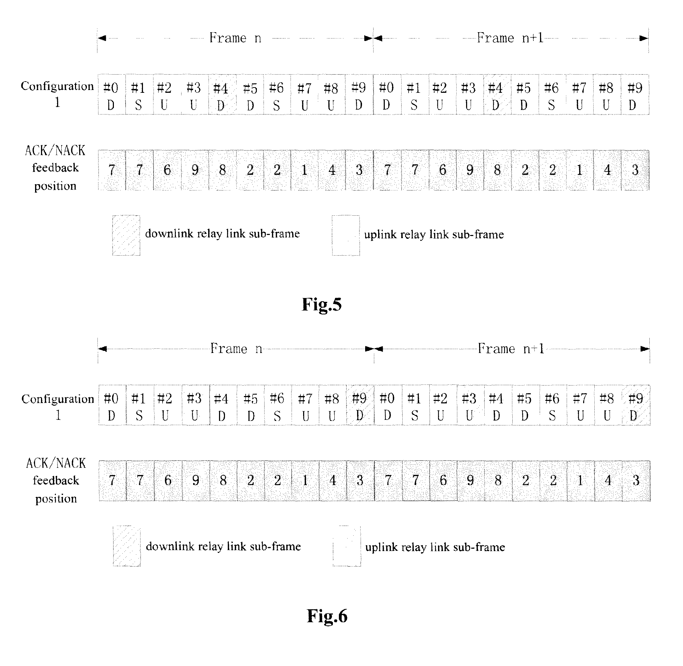

Figure 5 shows a schematic view of a first ACK/NACK feedback scheme of a sub-frame configuration 1.

As shown in Figure 5, according to the sub-frame configuration 1 of LTE TDD, among the 0th to the ninth sub-frames of each frame, the second, third, seventh and eighth sub-frames are uplink sub-frames, and the other sub-frames are downlink sub-frames. Moreover, the relay node receives a first signal from the base station in the fourth sub-frame, and the relay node sends a second signal to the base station in the eighth sub-frame. The first signal is a response signal to the second signal or the second signal is a response signal to the first signal. It can be seen that the fourth sub-frame is paired with the eighth sub-frame in this scheme.

Specifically, the fourth sub-frame is a downlink relay link sub-frame, and the relay node is in a receiving state in this sub-frame and for example receives a data signal from the base station. The eighth sub-frame is an uplink relay link sub-frame, and the relay node is in a sending state in this sub-frame and for example feeds back to the base station a decoding response signal ACK/NACK to the data signal. In the case where the fourth sub-frame is used as a downlink relay link sub-frame, the fourth sub-frame cannot be used as a downlink access link sub-frame, and the mobile station does not feed back ACK/NACK to the relay node in the eighth sub-frame which is at an ACK/NACK feedback position corresponding to the fourth sub-frame. Therefore, the relay node may send ACK/NACK to the base station in the eighth sub-frame. Thus the collision is avoided that the relay node has to receive a signal while sending a signal.

Figure 6 shows a schematic view of a second ACK/NACK feedback scheme of the sub-frame configuration 1;

As shown in Figure 6, according to the sub-frame configuration 1 of LTE TDD, among the 0th to the ninth sub-frames of each frame, the second, third, seventh and eighth sub-frames are uplink sub-frames, and the other sub-frames are downlink sub-frames. Moreover, the relay node receives a first signal from the base station in the ninth sub-frame, and the relay node sends a second signal to the base station in the third sub-frame. It can be seen that the ninth sub-frame is paired with the third sub-frame in this scheme.

Specifically, the ninth sub-frame is a downlink relay link sub-frame, and the relay node is in a receiving state in this sub-frame and for example receives a data signal from the base station. The third sub-frame is an uplink relay link sub-frame, and the relay node is in a sending state in this sub-frame and for example feeds back to the base station a decoding response signal ACK/NACK to the data signal. In the case where the ninth sub-frame is used as a downlink relay link sub-frame, the ninth sub-frame cannot be used as a downlink access link sub-frame, and the mobile station does not feed back ACK/NACK to the relay node in the third sub-frame which is at an ACK/NACK feedback position corresponding to the ninth sub-frame. Therefore, the relay node may send ACK/NACK to the base station in the third sub-frame. Thus the collision is avoided that the relay node has to receive a signal while sending a signal.

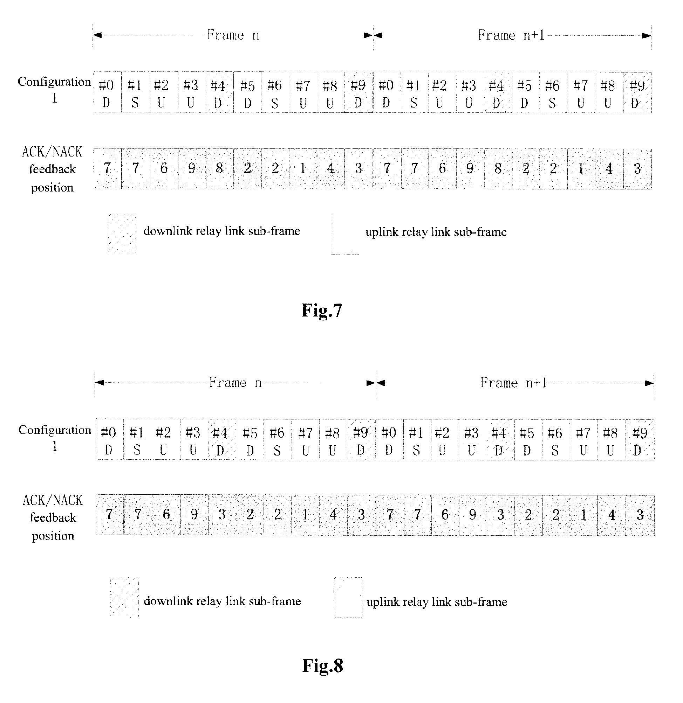

Figure 7 shows a schematic view of a third ACK/NACK feedback scheme of the sub-frame configuration 1.

As shown in Figure 7, according to the sub-frame configuration 1 of LTE TDD, among the 0th to the ninth sub-frames of each frame, the second, third, seventh and eighth sub-frames are uplink sub-frames, and the other sub-frames are downlink sub-frames. Moreover, the relay node receives a first signal from the base station in the ninth sub-frame, and the relay node sends a second signal to the base station in the third sub-frame; the relay node receives a third signal from the base station in the fourth sub-frame, and the relay node sends a fourth signal to the base station in the eighth sub-frame. The third signal is a response signal to the fourth signal or the fourth signal is a response signal to the third signal. It can be seen that, in this scheme, the fourth sub-frame is paired with the eighth sub-frame, and the ninth sub-frame is paired with the third sub-frame.

Specifically, the ninth sub-frame is a downlink relay link sub-frame, and the relay node is in a receiving state in this sub-frame and for example receives a data signal from the base station. The third sub-frame is an uplink relay link sub-frame, and the relay node is in a sending state in this sub-frame and for example feeds back to the base station a decoding response signal ACK/NACK to the data signal. In the case where the ninth sub-frame is used as a downlink relay link sub-frame, the ninth sub-frame cannot be used as a downlink access link sub-frame, and the mobile station does not feed back ACK/NACK to the relay node in the third sub-frame which is at an ACK/NACK feedback position corresponding to the ninth sub-frame. Therefore, the relay node may send ACK/NACK to the base station in the third sub-frame. Thus the collision is avoided that the relay node has to receive a signal while sending a signal.

Similarly, the mobile station may not send a signal to the relay node while the relay node is sending a signal to the base station in the eighth sub-frame.

Figure 8 shows a schematic view of a fourth ACK/NACK feedback scheme of the sub-frame configuration 1.

As shown in Figure 8, according to the sub-frame configuration 1 of LTE TDD, among the 0th to the ninth sub-frames of each frame, the second, third, seventh and eighth sub-frames are uplink sub-frames, and the other sub-frames are downlink sub-frames. Moreover, the relay node receives a fifth signal from the base station in the fourth sub-frame, the relay node receives a sixth signal from the base station in the ninth sub-frame, and the relay node sends a response signal to the fifth signal and the sixth signal to the base station in the third sub-frame. The fifth signal and the sixth signal may be data signals.

Specifically, the ninth and fourth sub-frames are downlink relay link sub-frames, and the relay node is in a receiving state in these sub-frames and for example receives a data signal from the base station. Moreover, the relay node also receives a data signal from the base station in the ninth sub-frame. The third sub-frame is an uplink relay link sub-frame, and the relay node is in a sending state in this sub-frame and for example feeds back to the base station a decoding response signal ACK/NACK to the data signals received in the fourth and ninth sub-frames. In the case where the ninth sub-frame is used as a downlink relay link sub-frame, the ninth sub-frame cannot be used as a downlink access link sub-frame, and the mobile station does not feed back ACK/NACK to the relay node in the third sub-frame which is at an ACK/NACK feedback position corresponding to the ninth sub-frame. Therefore, the relay node may send ACK/NACK to the base station in the third sub-frame. Thus the collision is avoided that the relay node has to receive a signal while sending a signal.

Similarly, for a data signal received in the fourth sub-frame, the sub-frame time when the relay node sends ACK/NACK to the base station is the third sub-frame. As mentioned above, the mobile station does not send a signal to the relay node while the relay node is sending a signal to the base station. Thus the above mentioned collision is avoided.

In another case in Figure 8, the relay node sends a seventh signal to the base station in the third sub-frame, and the relay node receives from the base station a response signal to the seventh signal in the ninth sub-frame; the relay node receives an eighth signal from the base station in the fourth sub-frame, and the relay node sends to the base station a response signal to the eighth signal in the third sub-frame. Herein, the seventh signal and the eighth signal may be data signals.

Similarly, the mobile station does not send a signal to the relay node while the relay node is sending a signal to the base station in the eighth sub-frame.

It can be seen that, in Figure 8, the ninth sub-frame is paired with the third sub-frame, but the fourth sub-frame is not paired. In Figure 8, for a data signal sent by the mobile station to the relay node in the eighth frame, the relay node should feed back ACK/NACK in the fourth sub-frame. However, the fourth sub-frame is used as a downlink relay link sub-frame. Therefore, there may be another kind of collision. This kind of collision may be avoided by utilizing the following solution. In the fourth frame, the relay node is firstly in a sending state, and feeds back ACK/NACK to the mobile station; and then the relay node switches from the sending state into a receiving state and becomes a downlink sub-frame. Specifically, in LTE TDD, the fourth sub-frame is used as an MBSFN (Multicast Broadcast Single Frequency Network) sub-frame. In the first one or two OFDM (Orthogonal Frequency Division Multiplexing) symbols of this sub-frame, the base station and the relay node sent respectively control and reference signals (may including ACK/NACK feedback signals) to their corresponding mobile stations. The subsequent OFDM symbols in this sub-frame are used for uplink relay link. In order to achieve this object, the fourth sub-frame of the base station should be configured to be a special sub-frame. In this special sub-frame, after the first one or two OFDM symbol periods, the base station immediately switches from the sending state into the receiving state such that the base station is able to receive a signal from the relay node. Of course, this scheme requires the base station to switch from the receiving state back into the sending state before the next sub-frame arrives. It should be noted that there should be two OFDM symbols reserved respectively for the switches from the receiving state into the sending state and vice versa, so as to avoid interference.

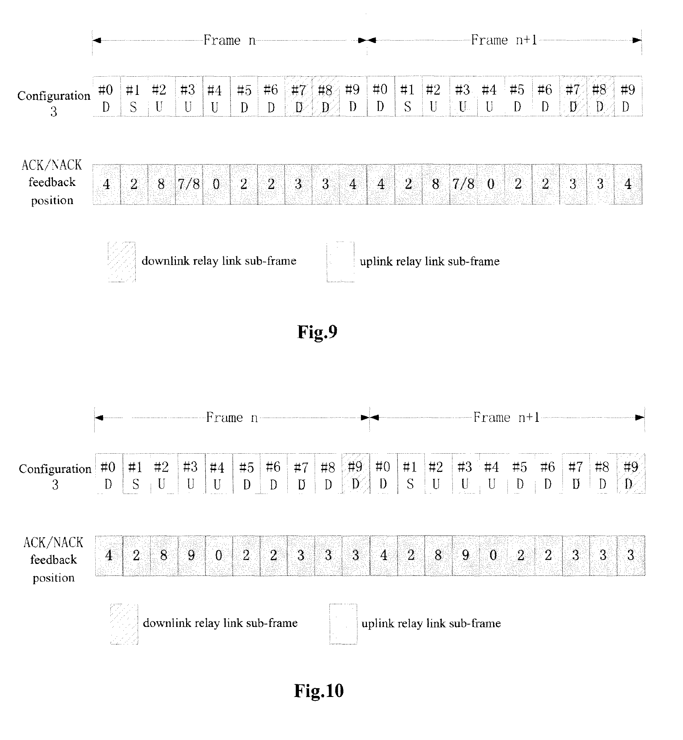

Figure 9 shows a schematic view of a first ACK/NACK feedback scheme of a sub-frame configuration 3.

As shown in Figure 9, according to the sub-frame configuration 3 of LTE TDD, among the 0th to the ninth sub-frames of each frame, the second, third and fourth sub-frames are uplink sub-frames, and the other sub-frames are downlink sub-frames. Moreover, the relay node sends a first signal to the base station in the third sub-frame, and the relay node receives a second signal from the base station in the seventh or eighth sub-frame. The first signal is a response signal to the second signal or the second signal is a response signal to the first signal. It can be seen that the third sub-frame is paired with the seventh/eighth sub-frame in this scheme.

Specifically, the third sub-frame is an uplink relay link sub-frame, and the relay node is in a sending state in this sub-frame and for example sends a data signal to the base station. The seventh or eighth sub-frame is a downlink relay link sub-frame, and the relay node is in a receiving state in this sub-frame and for example receives a decoding response signal ACK/NACK to the data signal from the base station. In the case where the seventh or eighth sub-frame is used as a downlink relay link sub-frame, the seventh or eighth sub-frame cannot be used as a downlink access link sub-frame, and the mobile station does not feed back ACK/NACK to the relay node in the third sub-frame which is at an ACK/NACK feedback position corresponding to the seventh or eighth sub-frame. Therefore, the relay node may send a data signal to the base station in the third sub-frame. Thus the collision is avoided that the relay node has to receive a signal while sending a signal.

In another case in Figure 9, the relay node receives a ninth signal from the base station in the seventh sub-frame, and the relay node receives a tenth signal from the base station in the eighth sub-frame; the relay node sends a response signal to the ninth signal and to the tenth signal to the base station in the third sub-frame. Herein, the ninth signal and the tenth signal may be data signals.

Specifically, considering the asymmetry between the uplink and downlink signal transmission (for example, the amount of data in the downlink direction is usually larger than that in the uplink direction), therefore herein the seventh and eighth sub-frames are used as downlink relay link sub-frames, and the relay node is in the receiving state in these two sub-frames and for example receives a data signal from the base station; the third sub-frame is used as uplink relay link sub-frame, and the relay node is in the sending state in this sub-frame and for example sends to the base station a decoding response signal ACK/NACK to the data signals received in the seventh and eighth sub-frames. In the case where the seventh and eighth sub-frames are used as downlink relay link sub-frames, the seventh and eighth sub-frames cannot be used as downlink access link sub-frames, and the mobile station does not feed back ACK/NACK to the relay node in the third sub-frame which is at an ACK/NACK feedback position corresponding to the seventh and eighth sub-frames. Therefore, the relay node may send ACK/NACK to the base station in the third sub-frame. Thus the collision is avoided that the relay node has to receive a signal while sending a signal.

Figure 10 shows a schematic view of a second ACK/NACK feedback scheme of the sub-frame configuration 3.

As shown in Figure 10, according to the sub-frame configuration 3 of LTE TDD, among the 0th to the ninth sub-frames of each frame, the second, third and fourth sub-frames are uplink sub-frames, and the other sub-frames are downlink sub-frames. Moreover, the relay node receives a first signal from the base station in the ninth sub-frame, and the relay node sends a second signal to the base station in the third sub-frame. The first signal is a response signal to the second signal or the second signal is a response signal to the first signal. It can be seen that the ninth sub-frame is paired with the third sub-frame in this scheme.

Specifically, the ninth sub-frame is a downlink relay link sub-frame, and the relay node is in a receiving state in this sub-frame and for example receives a data signal from the base station. The third sub-frame is an uplink relay link sub-frame, and the relay node is in a sending state in this sub-frame and for example sends a decoding response signal ACK/NACK to the data signal to the base station. In the case where the ninth sub-frame is used as a downlink relay link sub-frame, the ninth sub-frame cannot be used as a downlink access link sub-frame, and the mobile station does not feed back ACK/NACK to the relay node in the third sub-frame which is at an ACK/NACK feedback position corresponding to the ninth sub-frame. Therefore, the relay node may send ACK/NACK to the base station in the third sub-frame. Thus the collision is avoided that the relay node has to receive a signal while sending a signal.

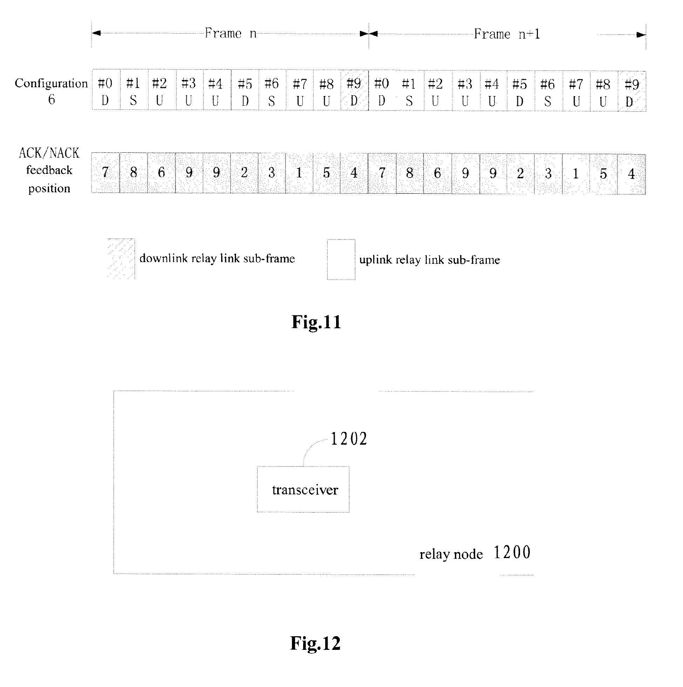

Figure 11 shows a seventh schematic view of a predetermined downlink sub-frame and a predetermined uplink sub-frame acquired according to a sub-frame configuration 6.

As shown in Figure 11, according to the sub-frame configuration 6 of LTE TDD, among the 0th to the ninth sub-frames of each frame, the second, third, fourth, seventh and eighth sub-frames are uplink sub-frames, and the other sub-frames are downlink sub-frames. Moreover, the relay node sends a first signal to the base station in the fourth sub-frame, and the relay node receives a second signal from the base station in the ninth sub-frame. The first signal is a response signal to the second signal or the second signal is a response signal to the first signal. It can be seen that the ninth sub-frame is paired with the fourth sub-frame in this scheme.

Specifically, the fourth sub-frame is an uplink relay link sub-frame, and the relay node is in a sending state in this sub-frame and for example sends a data signal to the base station. The ninth sub-frame is a downlink relay link sub-frame, and the relay node is in a receiving state in this sub-frame and for example receives a decoding response signal ACK/NACK to the data signal from the base station. In the case where the ninth sub-frame is used as a downlink relay link sub-frame, the ninth sub-frame cannot be used as a downlink access link sub-frame, and the mobile station does not send a signal to the relay node in the fourth sub-frame which is at an ACK/NACK feedback position corresponding to the ninth sub-frame. Therefore, the relay node may send a data signal to the base station in the fourth sub-frame. Thus the collision is avoided that the relay node has to receive a signal while sending a signal.

Figure 12 shows a structural view of a relay node according to an embodiment of the present invention.

The relay node 1200 provided by the embodiment is used in a time division duplex communication system, for example in an LTE TDD system. Therefore, the LTE TDD system includes a base station, a mobile station and the relay node 1200. The relay node 1200 includes a transceiver 1202. The transceiver 1202 is not in a receiving state and a sending state concurrently, and the transceiver 1202 is configured to: receive a first signal from the base station in a predetermined downlink sub-frame of a frame; and send a second signal to the base station in a predetermined uplink sub-frame of a frame; wherein the first signal is a response signal to the second signal or the second signal is a response signal to the first signal.

The transceiver 1202 of the relay node 1200 may also be configured to perform a flow shown in any one of the above mentioned Figures 5-11, which will not be described in detail herein.

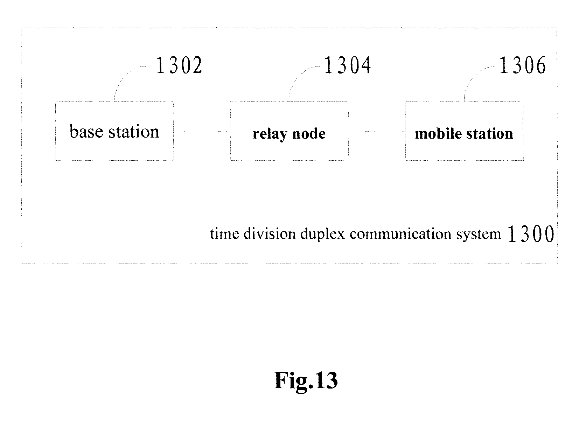

Figure 13 shows a structural view of a time division duplex communication system according to an embodiment of the present invention.

The time division duplex communication system 1300 provided by the embodiment includes a base station 1302, a mobile station 1306 and a relay node 1304 provided by the above mentioned embodiment.

The time division duplex communication system 1300 may be an LTE TDD system.

In order to make the relay node 1304 receive and send a signal respectively in a predetermined downlink sub-frame and a predetermined uplink sub-frame, the base station 1302 is configured to notify the relay node 1304 of the predetermined downlink sub-frame and the predetermined uplink sub-frame at the beginning of a communication. The base station 1302 may be configured to notify different relay nodes 1304 of the same predetermined downlink sub-frames and predetermined uplink sub-frames at the beginning of the communication, and the base station 1302 may also be configured to notify different relay nodes 1304 of different predetermined downlink sub-frames and predetermined uplink sub-frames at the beginning of the communication.

It should be noted that, in Figures 5-11, as for the shown relay link sub-frame, it only means that the communication between the relay node and the base station may utilize this sub-frame position, and it does not mean that the communication between the relay node and the mobile station and the communication between the base station and the mobile station cannot utilize this sub-frame position. In one embodiment, the communication between the base station and the mobile station may also utilize this sub-frame position. In another embodiment, the communication between the relay node and the mobile station may also utilize this sub-frame position. In the case where the communication between the relay node and the mobile station or the communication between the base station and the mobile station utilizes this sub-frame position, the feedback position for ACK/NACK in the prior art (for example as shown in Figure 2) may be utilized.

In the foregoing paragraphs, the embodiments of the present invention are described by taking an LTE TDD wireless communication system as an example. However, it should be understood that the embodiments of the present invention are not limited to those and may also be applied to similar TDD wireless communication systems.

It needs to be pointed out that it is obvious that each of the components or steps in the devices and methods of the present invention may be decomposed and/or recombined. These decomposition and/or recombination should be regarded as equivalent schemes of the present invention. Moreover, the steps carrying out the series of processes mentioned above may be performed naturally in order of time as described. However, the steps do not necessarily be performed according to the time sequence. Some of the steps may be carried out in parallel or independently from each other.

Although the present invention and its advantages have been described in detail, it should be understood that various changes, replacements, variations may be made without departing from the spirit and scope of the present invention defined by the appending claims. Moreover, the terms " comprise", "include" or any other variations thereof intend to cover non-exclusive "include", so that the procedure, method, article or means including a series of elements not only include those elements, but also include other elements that are not specifically listed, or also include inherent elements of this procedure, method, article or means.

Although the embodiments of the present invention are described in detail in conjunction with the accompanying drawings in the foregoing, it should be appreciated that the above mentioned embodiments are only for illustration of the present invention and do not limit the present invention. For the skilled in the art, various modifications and changes may be made to the above mentioned implementations without departing from the scope of the present invention. Therefore, the scope of the present invention is only defined by the appending claims and their equivalent meanings.

## Claims

1. A communication method in a time division duplex communication system, the communication system comprising a base station, a mobile station and a relay node, the relay node being not in a receiving state and a sending state concurrently, wherein the communication method comprises:
receiving, by the relay node, a first signal from the base station in a predetermined downlink sub-frame of a frame; and
sending, by the relay node, a second signal to the base station in a predetermined uplink sub-frame of a frame;
wherein the first signal is a response signal to the second signal or the second signal is a response signal to the first signal.

2. The method according to claim 1, wherein each frame comprises 10 sub-frames from the 0th sub-frame to the ninth sub-frame, the second, the third, the seventh and the eighth sub-frames are uplink sub-frames and the other sub-frames are downlink sub-frames, and
the relay node receives the first signal from the base station in the fourth sub-frame, and the relay node sends the second signal to the base station in the eighth sub-frame; or
the relay node receives the first signal from the base station in the ninth sub-frame, and the relay node sends the second signal to the base station in the third sub-frame.

3. The method according to claim 1, wherein each frame comprises 10 sub-frames from the 0th sub-frame to the ninth sub-frame, the second, the third, the seventh and the eighth sub-frames are uplink sub-frames, the other sub-frames are downlink sub-frames, and
the relay node receives the first signal from the base station in the ninth sub-frame, the relay node sends the second signal to the base station in the third sub-frame; and, the relay node receives a third signal from the base station in the fourth sub-frame, and the relay node sends a fourth signal to the base station in the eighth sub-frame, the third signal being a response signal to the fourth signal or the fourth signal being a response signal to the third signal.

4. The method according to claim 1, wherein each frame comprises 10 sub-frames from the 0th sub-frame to the ninth sub-frame, the second, the third, the seventh and the eighth sub-frames are uplink sub-frames, the other sub-frames are downlink sub-frames, and
the relay node receives a fifth signal from the base station in the fourth sub-frame, the relay node receives a sixth signal from the base station in the ninth sub-frame; and, the relay node sends a response signal to the fifth signal and the sixth signal to the base station in the third sub-frame.

5. The method according to claim 1, wherein each frame comprises 10 sub-frames from the 0th sub-frame to the ninth sub-frame, the second, the third, the seventh and the eighth sub-frames are uplink sub-frames, the other sub-frames are downlink sub-frames, and
the relay node sends the seventh signal to the base station in the third sub-frame, the relay node receives a response signal to the seventh signal from the base station in the ninth sub-frame, the relay node receives a eighth signal from the base station in the fourth sub-frame, and the relay node sends a response signal to the eighth signal to the base station in the third sub-frame.

6. The method according to claim 1, wherein each frame comprises 10 sub-frames from the 0th sub-frame to the ninth sub-frame, the second, the third and the fourth sub-frames are uplink sub-frames, the other sub-frames are downlink sub-frames, and
the relay node sends the first signal to the base station in the third sub-frame, the relay node receives the second signal from the base station in the seventh or the eighth sub-frame; or
the relay node receives the first signal from the base station in the ninth sub-frame, the relay node sends the second signal to the base station in the third sub-frame.

7. The method according to claim 1, wherein each frame comprises 10 sub-frames from the 0th sub-frame to the ninth sub-frame, the second, the third and the fourth sub-frames are uplink sub-frames, the other sub-frames are downlink sub-frames, and
the relay node receives a ninth signal from the base station in the seventh sub-frame, the relay node receives a tenth signal from the base station in the eighth sub-frame, and the relay node sends a response signal to the ninth signal and the tenth signal to the base station in the third sub-frame.

8. The method according to claim 1, wherein each frame comprises 10 sub-frames from the 0th sub-frame to the ninth sub-frame, where the second, the third, the fourth, the seventh and the eighth sub-frames are uplink sub-frames, the other sub-frames are downlink sub-frames, and
the relay node sends the first signal to the base station in the fourth sub-frame, the relay node receives the second signal from the base station in the ninth sub-frame.

9. A relay node, used in a time division duplex communication system, the communication system comprising a base station, a mobile station and a relay node, the relay node comprising a transceiver which is not in a receiving state and a sending state concurrently, wherein the transceiver is configured to:
receive a first signal from the base station in a predetermined downlink sub-frame of a frame; and
send a second signal to the base station in a predetermined uplink sub-frame of a frame;
wherein the first signal is a response signal to the second signal or the second signal is a response signal to the first signal.

10. The relay node according to claim 9, wherein each frame comprises 10 sub-frames from the 0th sub-frame to the ninth sub-frame, the second, the third, the seventh and the eighth sub-frames are uplink sub-frames and the other sub-frames are downlink sub-frames, and
the transceiver is configured to receive the first signal from the base station in the fourth sub-frame and to send the second signal to the base station in the eighth sub-frame; or
the transceiver is configured to receive the first signal from the base station in the ninth sub-frame and to send the second signal to the base station in the third sub-frame.

11. The relay node according to claim 9, wherein each frame comprises 10 sub-frames from the 0th sub-frame to the ninth sub-frame, the second, the third, the seventh and the eighth sub-frames are uplink sub-frames, the other sub-frames are downlink sub-frames, and
the transceiver is configured to receive the first signal from the base station in the ninth sub-frame and to send the second signal to the base station in the third sub-frame; and the transceiver is configured to receive a third signal from the base station in the fourth sub-frame and to send a fourth signal to the base station in the eighth sub-frame, wherein the third signal is a response signal to the fourth signal or the fourth signal is a response signal to the third signal.

12. The relay node according to claim 9, wherein each frame comprises 10 sub-frames from the 0th sub-frame to the ninth sub-frame, the second, the third, the seventh and the eighth sub-frames are uplink sub-frames, the other sub-frames are downlink sub-frames, and
the transceiver is configured to receive a fifth signal from the base station in the fourth sub-frame, to receive a sixth signal from the base station in the ninth sub-frame, and to send a response signal to the fifth signal and the sixth signal to the base station in the third sub-frame.

13. The relay node according to claim 9, wherein each frame comprises 10 sub-frames from the 0th sub-frame to the ninth sub-frame, the second, the third, the seventh and the eighth sub-frames are uplink sub-frames, the other sub-frames are downlink sub-frames, and
the transceiver is configured to send a seventh signal to the base station in the third sub-frame, to receive a response signal to the seventh signal from the base station in the ninth sub-frame, to receive an eighth signal from the base station in the fourth sub-frame and to send a response signal to the eighth signal to the base station in the third sub-frame.

14. The relay node according to claim 9, wherein each frame comprises 10 sub-frames from the 0th sub-frame to the ninth sub-frame, the second, the third and the fourth sub-frames are uplink sub-frames, the other sub-frames are downlink sub-frames, and
the transceiver is configured to send the first signal to the base station in the third sub-frame and to receive the second signal from the base station in the seventh or the eighth sub-frame; or
the transceiver is configured to receive the first signal from the base station in the ninth sub-frame and to send the second signal to the base station in the third sub-frame.

15. The relay node according to claim 9, wherein each frame comprises 10 sub-frames from the 0th sub-frame to the ninth sub-frame, the second, the third and the fourth sub-frames are uplink sub-frames, the other sub-frames are downlink sub-frames, and
the transceiver is configured to receive a ninth signal from the base station in the seventh sub-frame, to receive a tenth signal from the base station in the eighth sub-frame and to send a response signal to the ninth and the tenth signal to the base station in the third sub-frame.

16. The relay node according to claim 9, wherein each frame comprises 10 sub-frames from the 0th sub-frame to the ninth sub-frame, where the second, the third, the fourth, the seventh and the eighth sub-frames are uplink sub-frames, the other sub-frames are downlink sub-frames, and
the transceiver is configured to send the first signal to the base station in the fourth sub-frame and to receive the second signal from the base station in the ninth sub-frame.

17. A time division duplex communication system, comprising a base station, a mobile station, and a relay node according to any one of claims 9-16.

18. The time division duplex communication system according to claim 17, wherein the base station is configured to notify the relay node of the predetermined uplink sub-frame and the predetermined downlink sub-frame at the beginning of a communication.

19. The time division duplex communication system according to claim 18, wherein the base station is configured to notify different relay nodes of different predetermined uplink sub-frames and predetermined downlink sub-frames at the beginning of the communication.
